# EUROPEAN PATENT APPLICATION

(11) **EP 3 792 715 A1**
(43) Date of publication of application: **17.03.2021**
(21) Application number: 19197363.5
(22) Date of filing: 13.09.2019
(51) Int. Cl.: G05B 19/4099, B29C 64/386

(54) **METHOD FOR REMOTELY FABRICATING AN OBJECT**

(71) Applicant: UrbanAlps AG, 8008 Zürich (CH)
(72) Inventor: Ojeda Gonzalez-Posada, Alejandro, 5400 Baden (CH)
(74) Representative: AMMANN PATENTANWÄLTE AG

(57) **Abstract**

The method for remotely fabricating an object by means of a remote manufacturing machine (10a, 10b, 10c) configured to fabricate the object by an additive manufacturing process, method includes the steps of
- producing a virtual 3D model of the object to be fabricated,
- slicing the virtual 3D model into slices to form slice data,
- providing transmission data based on the slice data, the transmission data being different from the CAD data, and
- transmitting the transmission data from a server (20) over a network (30), in particular the internet, to the remote manufacturing machine.

The method may e.g. be applied for remotely fabricating a part of a locking system including at least one key and at least one lock.

## Description

The present invention relates to a method for remotely fabricating an object by means of an additive manufacturing process.

The object to be fabricated may be e.g. a key useable together with a lock or a set of keys useable together with a set of locks.

To fabricate said object, CAD data defining its shape may be produced and then transmitted to a remote manufacturing machine. However, transmission over the internet is insecure, as an unauthorized person may intercept the CAD data and may produce an unauthorized duplicate of the object. For instance, the unauthorized person may produce an exact duplicate of a key of a lock.

It is an aim of the present invention to provide a method which allows remote fabrication by means of an additive manufacturing process with increased security.

For solving this aim, a method according to claim 1 is provided. Also, a method according to claim 13 is provided. The further claims specify additional embodiments of the methods and a computer program.

According to claim 1 the method includes the transmission of transmission data from a server over a network to the remote manufacturing machine. The transmission data are different from the CAD data, which makes it difficult or impossible for an unauthorized person gaining access to the transmission data to reconstruct the CAD data.

The method may be carried out on a computer device which is located remote from the manufacturing machine. The computer device may be connected to a server or may serve itself as a server to transmit the transmission data to the manufacturing machine. Preferably, the server transmitting the transmission data is located outside of the building, in which the manufacturing machine is located. The server may be located outside of a radius of R from the manufacturing machine, wherein R may be 1 km, 10 km or more.

In one embodiment, the transmission data are slice data, which are produced from the CAD data by a slice algorithm. When slicing a CAD model into slices, numerical errors may occur such that e.g. the endpoints of the line segments do not fit together perfectly to form a curve. The slice algorithm needs some strategy to find the vertices of the line segments, which can be defined differently. As an unauthorized person gaining access to the transmission data does not know which slice algorithm exactly has been used, it is difficult or impossible for him to reconstruct the CAD data from the slice data.

In another embodiment of the method, the slice data are converted into transmission data which are different from the slice data. The slice data may be e.g. converted to machine data as transmission data, which include information on operating the manufacturing machine to fabricate the object. The machine data may include e.g. information on scan vectors defining the paths along which a laser beam of the manufacturing machine is moved and/or on the switching on and switching of the laser beam. The machine data may be produced e.g. by a hatching program, which is applied after the slicing program. As the transmission data do not include among others information on the type of slicing program and/or of manufacturing machine used, it is difficult or impossible to reconstruct the CAD data from the transmission data.

In an embodiment of the method the transmission data correspond to the machine code, which controls the manufacturing machine to fabricate the object. In another embodiment of the method the transmission data are different from the machine code. In that case a computer of the manufacturing machine may produce the machine code based on the transmission data received.

The security of fabrication may be increased e.g. by encrypting the transmission data and/or by transmitting the transmission data in packages, wherein the time when packages are sent depend on the fabrication progress on the fabrication machine.

Following, further embodiments are described with reference to Figures. In the drawings:
Fig. 1 shows schematically the process, in which an object to be fabricated is designed and fabricated by a manufacturing machine;
Fig. 2a-2e shows different kinds of the hatching strategy for a manufacturing machine using a scanning device;
Fig. 3 shows an example of a scanning device of a manufacturing machine;
Fig. 4 shows a perspective view of a key as an object to be fabricated;
Fig. 5 shows schematically the arrangement of components to perform a method, in which an object to be fabricated is designed and fabricated by a manufacturing machine;
Fig. 6 shows a perspective view of a part of a lock, in which the key of Fig. 4 is inserted;
Fig. 7 shows a perspective view of the blocking bar of the lock according to Fig. 6; and
Fig. 8 shows a top view of the blocking bar of Fig. 7.

Before the individual embodiments and variants thereof are described in more detail, we summarize the main aspects to fabricate an object by an additive manufacturing process.

To manufacture an object, there is
A) a designing part, in which the shape of the object is modeled and the data are processed such that in the end data are provided which are used to produce a machine code for controlling the manufacturing machine to fabricate the object, and
B) a manufacturing part, in which the manufacturing machine manufactures the object according to the machine code.

### A) Designing part:

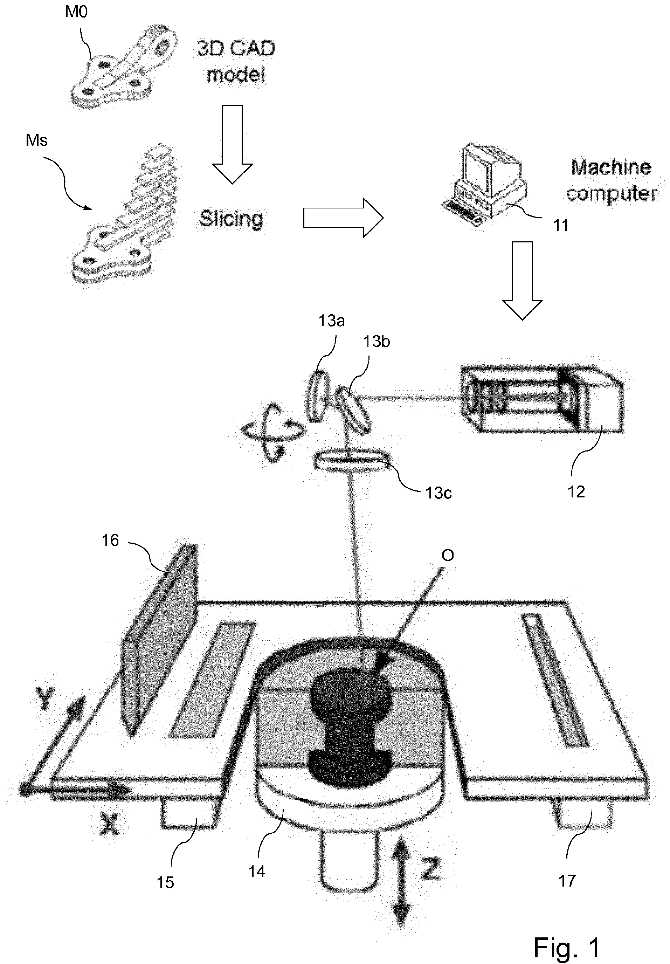

The object is modeled by a CAD program. Thereby, a virtual 3D model is produced which defines among others the shape of the object. This is illustrated in Fig. 1 by M0. The 3D model may be converted e.g. into an STL file, which describes the surface geometry of the object in form of triangular faces.

The 3D model or the converted file, such as the STL file, is imported into a slicer program, which divides the object in consecutive layers ("slices"), which are associated to the layers produced in the additive manufacturing process. The slicing is illustrated in Fig. 1 by Ms. The slicer program processes the data such that for each layer information is established on the contour defining the object as sliced in this layer and on whether the area on either side of the contour is part of the object or not. E.g. a portion of the contour may enclose a hole, which would not be part of the object.

Depending on the type of manufacturing machine used, a strategy is to be defined on how the area belonging to the object ("internal geometry") is filled.

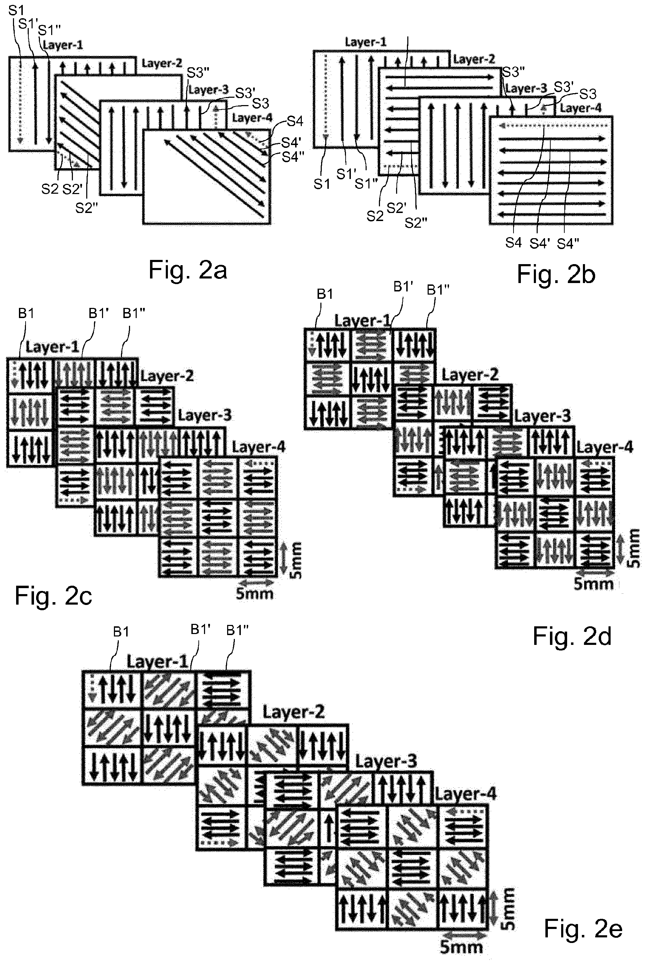

For a manufacturing machine, which uses e.g. a laser beam which is moved in the plane to selectively melt powder in the build area, a hatching algorithm is applied after the slicing, which defines the hatch strategy of the individual layers. This strategy may include a raster pattern of scan vectors which fill the internal geometry with paths and laser On and laser Off commands. Commonly, the direction of each subsequent scan vector is rotated by 180° forming an orthogonal pattern across the part. Fig.2a shows e.g. the scan vectors S1, S1', S1" for "Layer-1", wherein S1 is antiparallel to S1', and S1" is antiparallel to S1'. Accordingly, each scan vector S2, S2', S3", etc. for "Layer-2", each scan vector S3, S3', S3", etc. for "Layer-3" and each vector S4, S4', S4", etc. for "Layer-4" is shown in Fig. 2a as rotated by 180° with regard to the previous scan vector of the same layer.

The direction of the scan vectors from one layer to the next one may also change: In Fig. 2a e.g. the direction of the scan vectors of a subsequent layer is rotated by 45° with regard to the scan vectors of the previous layer. In the example shown in Fig. 2b, the direction of the scan vectors of a subsequent layer is rotated by 90° with regard to the scan vectors of the previous layer.

Further, it conceivable to divide a layer into blocks, e.g. squares of a particular size, and to define for each block of a layer the hatching. Fig. 2c shows an example, in which the scan vectors in adjacent blocks B1, B1', B1" are parallel to each other. Fig. 2d shows an example with scan vectors in adjacent blocks B1, B1', B1" being perpendicular to each other. Fig. 2e shows an example with scan vectors in adjacent blocks B1, B1', B1" being at 45° to each other.

### B) Manufacturing part:

Once it is defined how each layer is built up, the machine code is produced, which includes the instructions on how the manufacturing machine is operated. The machine code may be e.g. a G-code as used as a numerical control (NC) programming language in motion control. The machine code may be e.g. produced by the computer 11 ("control unit") of the manufacturing machine.

The manufacturing machine is controlled by the machine code such that the object is fabricated. Various machines are suitable to produce the object in an additive manufacturing processes, e.g. selective laser melting (SLM), laser sintering, laser melting, electron beam melting, fused deposition modeling, material jetting, photopolymer jetting, binder jetting, stereolithography and injection.

Fig. 1 shows an example of a manufacturing machine, which includes the following components:
- a laser source 12 to produce at least one laser beam,
- a scanning device, which serves for moving the laser beam along the XY-plane and which may include one or more mirrors 13a, 13b, e.g. two mirrors, and/or one or more lenses 13c, e.g. a f-theta lens,
- a fabrication bed with a build platform 14, which is movable in the Z-direction, i.e. vertical direction, and which includes the base plate for receiving consecutively a layer of material, which is heated by the laser beam at the specific locations to produce the object O,
- a feed container 15 to receive and deliver the material to be heated, e.g. a powder, wherein the feed container may be lifted in the Z-direction,
- a scraper 16, which is movable in the X-direction and which serves for forming a layer of material on the build platform 14,
- an overflow container 17 for collecting the excess material when the scraper 16 forms the layer.

Alternatively or additionally to the scraper 16 other devices are usable to produce a layer of material, e.g. a rotatable roller. The layer of material may also be produced by means of a nozzle which is movable along the fabrication bed and out of which the material is ejected.

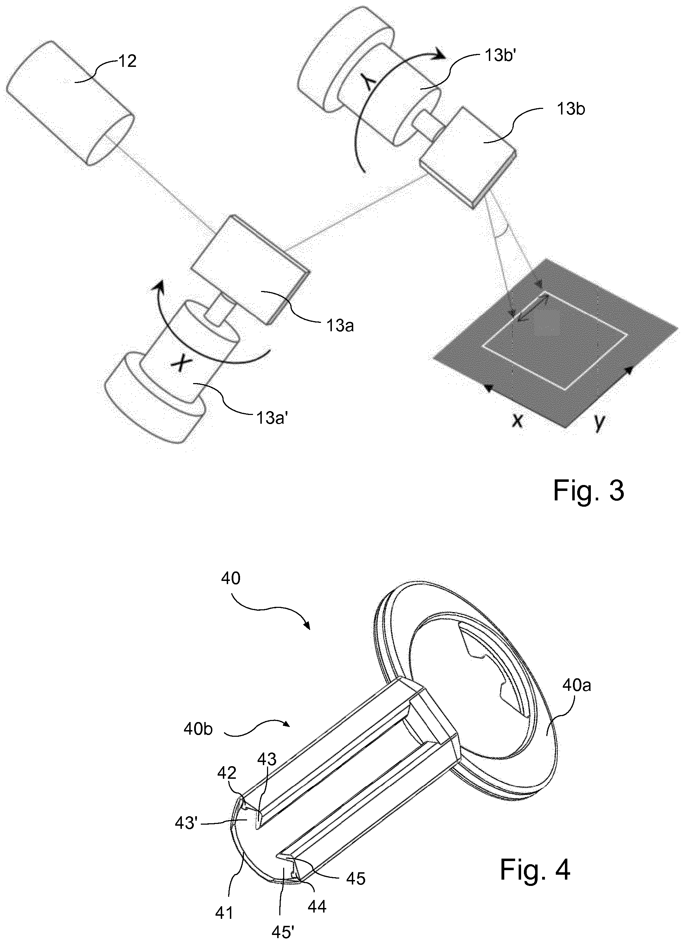

Fig. 3 shows in more detail the scanning device with two mirrors 13a, 13b used to deflect the beam produced by the laser source 12. The mirrors 13a, 13b are driven by motors 13a', 13b', e.g. Galvo motors. To precisely rotate the motors 13a', 13b' a closed-loop may be provided, in which an encoder of a motor detects its actual position and fed this information back to the driver.

One possible procedure for fabricating an object O by means of the SLM technology is as follows:
The SLM technology is a powder bed based additive manufacturing technique where, typically 20 to 150 Micrometer thick, layers of powder build material are successively laid upon a substrate of a similar material. After the deposition of each layer a high-power laser 12, typically 50 W to 1 kW, is used to selectively melt the metal powder and underlying material to ensure metallurgical bonding. The area melted is defined by a 3D CAD model of the desired part which is sliced into layers of corresponding thickness to the powder layer to produce slice data. The area of the layer that is designated to be solid is then exposed to the laser beam in a pattern defined by the hatch strategy, e.g. according to one of the variants shown in Fig.2. The hatch strategy of an individual layer consists of a raster pattern of scan vectors which fill the internal geometry with paths and laser On and laser Off commands. The hatch strategy is then translated into the machine code ("machine language"), this is, the movements of the scanner mirrors 13a, 13b to produce the desired X, Y movements, the recoating command, the waiting time, error checks, etc.

Instead of scanning the XY-plane, other technologies are possible to input energy at specific locations of a layer. For instance, in the mask-image-projection-based stereolithography, the shape of a whole layer may be simultaneously formed. In this technology, a two-dimensional mask image is generated for each layer. The mask image is projected onto a photocurable liquid resin surface to cure it in the shape of the image. The mask image may be produced by a micromirror device, which enables one to simultaneously control a large number of small mirrors (e.g. about 1 million) to turn on or off a pixel each at high rate, e.g. at 5 KHz or more. In this case machine data may be produced in the designing part, which are based on the data provided by the slice program and which include mask images. The machine data are used to produce the instructions to turn on or off the mirrors of the micromirror device.

In the following the principles described so far described are applied to the manufacturing of one or more members of a locking system as an example for fabricating an object. The locking system may include a key with a specific key coding and a lock, which can be opened and closed by said key and thus has a lock coding associated to the key coding. The key may have various embodiments. In particular, keys which include one or more undercuts are construed to be manufactured by an additive manufacturing process, since it may be difficult or even impossible to form the undercuts by traditional methods, such as cutting or casting.

Fig. 4 is an example of a key 40 with one or more undercuts. It has a handling part 40a, e.g. a bow, and a key shank 40b extending from the handling part 40a and being insertable into the keyway of a lock.

In the present embodiment, the key shank 40b has a semi-closed profile enclosing at least partially the coding part which defines the key coding. The key shank 40b has an arcuate middle portion 41 connecting two side portions 42, 44 each being connected to a return portion 43, 45. Thus, the key shank 40b is shaped towards its middle. The portions 42 and 43 as well as the portions 44 and 45 enclose each a coding cavity 43' and 45', respectively, in which the key coding is formed, e.g. in form of one or more coding tracks. A coding track extends along the key shank 40b and may have e.g. a wavelike course. The coding track may be formed e.g. by a line of successive channel portions and/or ridge portions.

When looking at the key 40 itself, the portions 42-45 prevent that the coding part of the key 40 is visible from outside. This impedes an unauthorized duplication of the key 40 e.g. by producing a copy based on pictures taken from the key 40.

When inserting the key 40 into the lock, movable validating elements protrude into the coding cavity 43' or 45' and follow the coding track of the key 40 formed therein. When the validating elements have the correct positions, the lock can be opened.

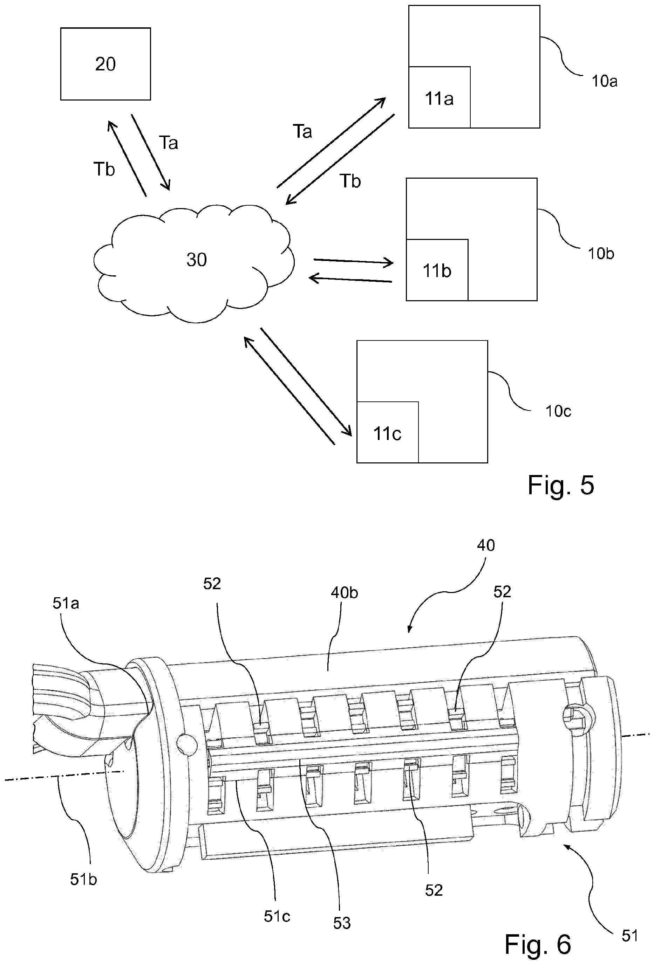

Fig. 5 shows a schematic illustration of a remote and safe fabrication of an object, e.g. one or more members of a locking system. In the following we assume that the object to be produced is a key. The procedure is applicable in analogous manner for another object than a key.

The reference number 20 illustrates a computer device where the key may be designed according to the description of the designing part A) above. The computer device 20 may be a single computer, which allows performing all steps of the designing part including the transmission of the data to the manufacturing machine. Thus, the computer in this case serves also as a server connected to the network. It is also conceivable that several computers connected to each other form the computer device 20, e.g. a first computer may be used to produce transmission data, which are then transferred to a second computer which acts as a server connected to the network, e.g. the internet, for transmission.

The reference numbers 10a, 10b, 10c refer to possible manufacturing machines where the key may be fabricated according to the description of the manufacturing part B) above. In Fig. 5 three manufacturing machines are shown. Of course, the number may be lower or larger and may be one, two, three or more.

A manufacturing machine 10a, 10b, 10c is arranged remotely from the computer device 20. E.g. a manufacturing machine 10a, 10b, 10c is located outside of the building, in which the computer device 20 is located, and/or a manufacturing machine 10a, 10b, 10c is located outside of a radius of R from the computer device 20, wherein R may be 1 km, 10 km or more. It is conceivable that a manufacturing machine 10a, 10b, 10c and the computer device 20 are located in different countries and/or on different continents.

The reference number 30 illustrates the network, typically the internet, through which data from the computer device 20 can be delivered to a manufacturing machine 10a, 10b, 10c as indicated by the arrows Ta. If need be data can also be delivered from a manufacturing machine 10a, 10b, 10c to the computer device 20 via the network 30 as indicated by the arrows Tb.

In the designing part A) the computer device 20 defines the key coding used for the key to be manufactured. In order to guarantee that the key coding is unique the computer device 20 may have e.g. access to a database in which data are stored on the key coding of the keys which have already been produced. Further, the computer device 20 gains access to information on the type which a manufacturing machine 10a, 10b, 10c has in order to deliver transmission data adapted to said type. Said type information may be delivered through the network 30 by transmission Tb or it may be gathered in another way. One may establish e.g. a database which the computer device 20 has access to and which contains information on the type of manufacturing machines 10a, 10b, 10c which are configured to be accessible by the computer device 20 via the network 30.

The computer device 20 then produces the 3D model for the key with the specific key coding, divides it into slices by means of the slice algorithm and produces transmission data to be transmitted to a computer machine 11a, 11b, 11c of a manufacturing machine 10a, 10b, 10c.

The transmission data are different from the CAD data, which define the 3D model. They may be e.g. the slice data provided by the slice algorithm. Alternatively, the transmission data may be produced based on converting the slice data to machine data, which include information on the operation of the manufacturing machine. The machine data may e.g. include information on scan vectors defining the paths along which a laser beam of the manufacturing machine is moved to fuse the powder in a layer, information on the switching on and switching of the laser beam when moved to fuse the powder in a layer and/or information on basic machine operations such as the command for recoating, for shifting the platform 14, starting the treatment of the next layer, etc.

The transmission data may also be produced as a function of one or more parameters defining the specific type of manufacturing machine 10a, 10b, 10c, which is chosen for the fabrication of the object. E.g. each brand of a manufacturing machine 10a, 10b, 10c and/or each model of the same brand may have different parameters even if the additive manufacturing process is in principle the same. Parameters may be the size of the laser beam spot, the thickness of a layer, etc. This may lead to different process parameters, such as laser power, speed with which the laser beam is moved, etc. and different slicing and hatching geometries.

In general, the transmission data are different from a STL file, IGES file, STEP file, BRL-CAD file or any other commonly used CAD file format. Thus, based on the transmission data reconstruction of the CAD data defining the 3D model is hampered.

Based on the transmission data, the computer machine 11a, 11b, 11c of a manufacturing machine 10a, 10b, 10c may produce the machine code for controlling the controllable components of the manufacturing machine 10a, 10b, 10c. E.g. the machine code may control the movements of the motors 13a', 13b' and with it the mirrors 13a, 13b in Fig. 3, such that the laser beam moves in line with the hatching strategy calculated by the computer device 20.

There are various ways to transmit the transmission data to the computer machine 11a, 11b, 11c of a manufacturing machine 10a, 10b, 10c via the network 30:
T1: the transmission data are transmitted before the manufacturing machine starts the fabrication process,
T2: the transmission data are transmitted in packages, wherein a subsequent package is only transmitted, when the computer machine 11a, 11b, 11c of the manufacturing machine 10a, 10b, 10c has sent a signal to the computer device 20 that at least part of the layers defined by the previous packages has been fabricated. For instance a package may include the information for fabricating one or more layers, e.g. ten layers.

In T1 and/or T2 the transmission data and/or the packages thereof may be encrypted before its transmission, e.g. by an AES (Advanced Encryption Standard) algorithm such as an AES-256 encryption algorithm or by a point-to-point encryption (P2PE). The machine computer 11a, 11b, 11c of a manufacturing machine 10a, 10b, 10c includes the necessary decryption information to decrypt the encrypted data transmitted by the computer device 20.

Apart from keys the method described herein can also be applied to fabricate other objects, e.g. a part of the lock, by means of the added manufacturing process. It is e.g. conceivable to configure a lock such that it includes a coding member which defines the lock coding, whereas the remaining part of the lock is non-coding, i.e. it is free of any lock coding. The coding member may e.g. be a blocking bar. Separating the lock into a coding member and in a non-coding part simplifies the manufacturing of a plurality of locks with different lock codings. To this end, only the coding member has to be specifically fabricated in line with the lock coding, whereas the same components can be used to produce the non-coding parts of the locks.

The key and the coding member may be produced in the same job by a manufacturing machine 10a, 10b, 10c. The components defining the non-coding part of the lock may be preassembled and the coding member once fabricated is added thereto to provide an individualized lock.

Fig. 6 shows an example of a part of a lock, in which the blocking bar 53 defines the lock coding and in which a key 40 is inserted. The lock includes a plug 51, validating elements 52 and a housing (not shown), which has a circular cylindrical opening for receiving the components 40, 51, 52, 53.

When the key 40 with the correct coding is used, then the components 40, 51, 52, 53 can be rotated relative to the housing around the rotation axis 51b.

The plug 51 comprises a keyway 51a, which extends in the insertion direction of the key 40 and which serves for receiving the shank 40b of the key 40.

The plug 51 has a receiving groove 51c, which extends alongside of the plug 51 and which serves for receiving the blocking bar 53 in the unlocked state of the lock. The blocking bar 53 is preloaded, such that in the locked state it is pushed into a longitudinal groove formed in the housing opposed to the receiving groove 51c. Thereby, rotation of the components 51, 52, 53 with respect to the housing is disabled.

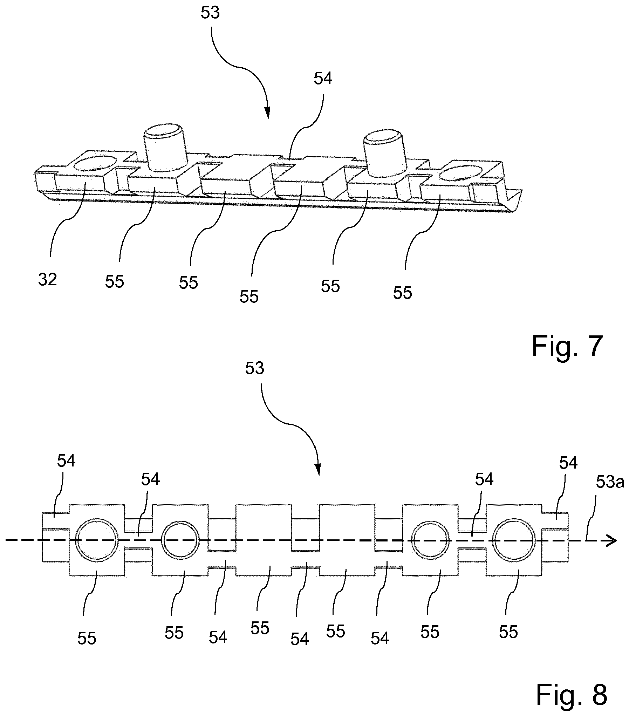

Fig. 7 and 8 show the blocking bar 53 of Fig. 6 in more detail. It comprises ridge portions 54 and spacer portions 55 arranged therebetween.

Each ridge portion 54 of the blocking bar 53 is arranged at a specific position relative to a reference axis, e.g. the middle axis 53a, along which the blocking bar 53 extends. The specific lock coding is defined by the positions chosen for the ridge portions 54.

When inserting the key 40 into the keyway 51a, the validating elements 52, which are rotatable around the axis 51b, cooperate with the blocking bar 53. The validating element 52 have recesses, which, when correctly positioned form together with the receiving groove 51c a receiving space which is substantially complementary to the form defined by the portions 54, 55 of the blocking bar 53, so that the blocking bar 53 can be received in said receiving space.

The method according to Fig. 5 allows also the fabrication of a set of keys in the same build job, in which all keys or at least some of them have their unique key coding. To this end, the 3D model M0 defines the set of keys, which is sliced and converted into the transmission data transmitted to a manufacturing machine 10a, 10b, 10c.

From the preceding description, numerous modifications are accessible to one skilled in the art without departing from the scope of protection of the invention that is defined by the claims.

## Claims

1. A method for remotely fabricating an object, in particular a part (40, 53) of a locking system including at least one key and at least one lock, by means of a remote manufacturing machine (10a, 10b, 10c) configured to fabricate the object by an additive manufacturing process, wherein the method includes the steps of
- producing a virtual 3D model of the object (40, 53) to be fabricated, the 3D model being defined by CAD data,
- slicing the virtual 3D model into slices to form slice data,
- providing transmission data based on the slice data, the transmission data being different from the CAD data, and
- transmitting the transmission data from a server (20) over a network (30), in particular the internet, to the remote manufacturing machine.

2. The method according to claim 1, wherein the transmission data are transmitted in packages, wherein at least one of the packages is transmitted after the manufacturing machine (10a, 10b, 10c) has transmitted a signal to the server (20) indicating that at least a portion of the object (40, 53) has been fabricated based on at least one of the previous packages transmitted, preferably a package transmitted defines one or more layers of the object fabricated by the manufacturing machine.

3. The method according to any one of the preceding claims, wherein the transmission data are encrypted before transmission to the remote manufacturing machine (10a, 10b, 10c) .

4. The method according to any one of the preceding claims, wherein providing the transmission data includes the following step A1 or A2:
A1) the slice data are taken as transmission data,
A2) the slice data are converted into transmission data, which are different from the slice data.

5. The method according to claim 4, wherein in step A2 the slice data are converted to machine data as transmission data, the machine data including information on operating the manufacturing machine (10a, 10b, 10c) to fabricate the object.

6. The method according to claim 5, wherein the machine data include at least one of the following data B1 to B3:
B1) information on scan vectors (S1-S4, S1'-S4', S1"-S4") defining the paths along which a laser beam of the manufacturing machine (10a, 10b, 10c) is moved for fabricating a layer of the object,
B2) information on the switching on and switching of the laser beam when moved to fabricate a layer of the object,
B3) information defining the motion of at least one movable component of the manufacturing machine during the fabrication process, in particular a movable coating device (15, 16) for producing a layer of powder to be fused and/or a movable platform (14) on which the object is fabricated.

7. The method according to any one of the preceding claims, further including the step of providing at least one parameter defining the specific type of manufacturing machine (10a, 10b, 10c) to which the transmission data are to be transmitted, wherein the slice data and/or the transmission data are produced as a function of said at least one parameter, in particular the at least one parameter including the size of a laser beam spot and/or of a thickness of a layer produced in the fabrication process.

8. The method according to any one of the preceding claims, wherein the object to be fabricated is a part of a locking system, which part includes at least one key (40) and at least one lock member (53) of the at least one lock, the at least one key comprising a key coding and the at least one lock member comprising a lock coding associated to the key coding.

9. The method according to claim 8, wherein the at least one lock member is a blocking bar (53), which is configured to be arranged between a housing and a plug (51) of the lock in the locked state of the at least one lock and to be receivable in a receiving space in the plug (51) so that the plug is rotatable with respect to the housing in the unlocked state of the at least one lock.

10. The method according to any one of the preceding claims, wherein the object to be fabricated is a part (40, 53) of a locking system, which part includes at least one of the following components C1 and C2:
C1) at least one key (40) comprising a key shank (40b), which at least in a part of its axial length includes a profile which is closed or semi-closed to define at least one cavity (43', 45') including a key coding,
C2) a plurality of keys (40), wherein the transmission data include information to fabricate said plurality of keys in the same fabrication process of the manufacturing machine (10a, 10b, 10c), preferably at least two of said plurality of keys (40) have different key codings.

11. The method according to any one of the preceding claims, further including at least one of the following steps D1 and D2:
D1) after the object (40, 53) has been fabricated the server (20) receives a completion signal transmitted by the manufacturing machine (10a, 10b, 10c) and indicating that the fabrication has been completed,
D2) during the fabrication of the object (40, 53) the server (20) receives a non-completion signal transmitted by the manufacturing machine (10a, 10b, 10c) and indicating that the fabrication has not been completed, in particular the server (20) receives a non-completion signal in case that during the fabrication of the object (40, 43) an error occurs in the manufacturing machine.

12. The method according to any one of the preceding claims, wherein transmission of the transmission data triggers the manufacturing machine (10a, 10b, 10c) to start the fabrication of the object.

13. A method for remotely fabricating an object, in particular a part (40, 53) of a locking system including at least one key and at least one lock, by means of a remote manufacturing machine (10a, 10b, 10c) configured to fabricate the object by an additive manufacturing process, the method being configured to be used in combination with the method according to any one of the preceding claims and including the steps of:
- receiving the transmission data from the server (20) over the network (30), and
- fabricating the object (40, 53) by means of the manufacturing machine (10a, 10b, 10c).

14. The method according to claim 13, wherein the manufacturing machine (10a, 10b, 10c) includes a computer (11a, 11b, 11c), which, based on the transmission data received, produces the machine code, which controls the manufacturing machine (10a, 10b, 10c) to fabricate the object, preferably the machine code is a G-code and/or preferably the machine code controls a scanning device (13a, 13b, 13a', 13b', 13c) of the manufacturing machine (10a, 10b, 10c).

15. The method according to claim 13 or 14, wherein the object to be fabricated is a part (40, 53) of a locking system, which part includes at least one key (40) and at least one lock member (53), the at least one key comprising a key coding and the at least one lock member comprising a lock coding associated to the key coding, the method includes further the step of providing at least one lock portion (51, 52) and adding the at least one lock member (53) to said lock portion to form a lock having the lock coding, preferably a plurality of locks is formed, wherein the lock portions of said plurality of locks have the same configuration, whereas the lock members have different lock codings.

16. Computer program, during the execution of which on a computer device (20) the method according to any one of claims 1 to 12 is carried out.
